(19) Europäisches Patentamt
European Patent Office
Office européen des brevets

(11) **EP 3 790 223 A1**

(12) **DEMANDE DE BREVET EUROPEEN**

(43) Date de publication:
**10.03.2021 Bulletin 2021/10**

(51) Int Cl.:
**H04L 9/08** (2006.01)

(21) Numéro de dépôt: **20195146.4**

(22) Date de dépôt: **08.09.2020**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **09.09.2019 FR 1909897**

(71) Demandeur: **Commissariat à l'énergie atomique et aux énergies alternatives 75015 Paris (FR)**

(72) Inventeurs:
• **HENNEBERT, Christine**
  **38054 GRENOBLE CEDEX 9 (FR)**
• **BARROIS, Florian**
  **38054 GRENOBLE CEDEX 9 (FR)**

(74) Mandataire: **Brevalex**
  **56, Boulevard de l'Embouchure**
  **B.P. 27519**
  **31075 Toulouse Cedex 2 (FR)**

(54) **GÉNÉRATION D'UN PORTEFEUILLE CONTEXTUEL MULTI-UTILISATEUR DE CLÉS PRIVÉES ET UTILISATION D'UN TEL PORTEFEUILLE**

(57) La présente invention concerne une méthode de génération d'un portefeuille de clés hiérarchique déterministe, pour signer notamment des transactions à destination d'une chaîne de blocs. La méthode de génération comprend une phase d'initialisation par un administrateur ainsi qu'une phase de paramétrage pour au moins un utilisateur. A partir du compte administrateur sont créés (430) des contextes d'utilisation de clé privée, chaque contexte précisant les conditions d'utilisation de la clé privée dans ledit contexte. On crée également des comptes utilisateur (440), chaque compte utilisateur étant associé à une clé privée dans la structure arborescente, la clé privée dudit utilisateur étant obtenue à partir d'une clé privée maîtresse de l'administrateur, du contexte d'utilisation auquel le compte utilisateur est rattaché, et de l'identifiant de l'utilisateur.

connexion compte administrateur code PIN par défaut — 410

génération de la clé privée maitresse $k_m$ à partir du germe aléatoire — 420

création des contextes d'utilisation des clés privées $c(1), ..., c(n)$ — 430

création des comptes d'utilisateur et rattachement aux contextes d'utilisation — 440

**Fig. 4**

EP 3 790 223 A1

**Description**

**DOMAINE TECHNIQUE**

La présente invention concerne le domaine général des chaînes de blocs (*blockchains*) et plus particulièrement celui des portefeuilles déterministes de clés privées permettant notamment de signer des transactions sur des chaînes de blocs.

**ÉTAT DE LA TECHNIQUE ANTÉRIEURE**

Dans le domaine des chaînes de blocs, les transactions sont des messages signés par les clés privées des différents utilisateurs et émanant de leurs comptes respectifs (selon la terminologie Ethereum) ou de leurs adresses respectives (selon la terminologie Bitcoin).

Chaque compte d'un utilisateur est associé à un couple de clé publique-clé privée d'un cryptosystème asymétrique, généralement un cryptosystème sur courbe elliptique, l'identifiant du compte étant obtenu par hachage de la clé publique en question. La clé privée est connue de l'utilisateur seul.

Lorsque l'utilisateur veut transmettre une transaction à la chaîne de blocs à partir de l'un de ses comptes, il la signe avec sa clé privée, par exemple au moyen de l'algorithme ECDSA (Elliptic Curve Digital Signature Algorithm). Chacun peut alors vérifier que la transaction a bien été signée par le titulaire du compte.

En règle générale, un utilisateur possède une pluralité de comptes, chaque compte étant associé de manière unique à un couple de clé privée-clé publique. Un utilisateur dispose par conséquent d'un ensemble de clés privées, encore dénommé portefeuille de clés ou plus simplement portefeuille.

On distingue classiquement les portefeuilles non déterministes (ou aléatoires) des portefeuilles déterministes.

Dans un portefeuille non déterministe, aussi connu sous l'acronyme JBOK (Just a Bunch Of Keys), les clés sont générées de manière aléatoire. Ce type de portefeuille n'est pas structuré et sa gestion est donc complexe. En outre, la maintenance du portefeuille implique d'effectuer des opérations de sauvegarde relativement lourdes.

Pour remédier à ces difficultés, on a généralement recours à des portefeuilles hiérarchiques déterministes dans lesquels toutes les clés privées sont générées, de manière arborescente, à partir d'un même germe. Autrement dit, la connaissance du germe permet de retrouver l'ensemble des clés privées du portefeuille.

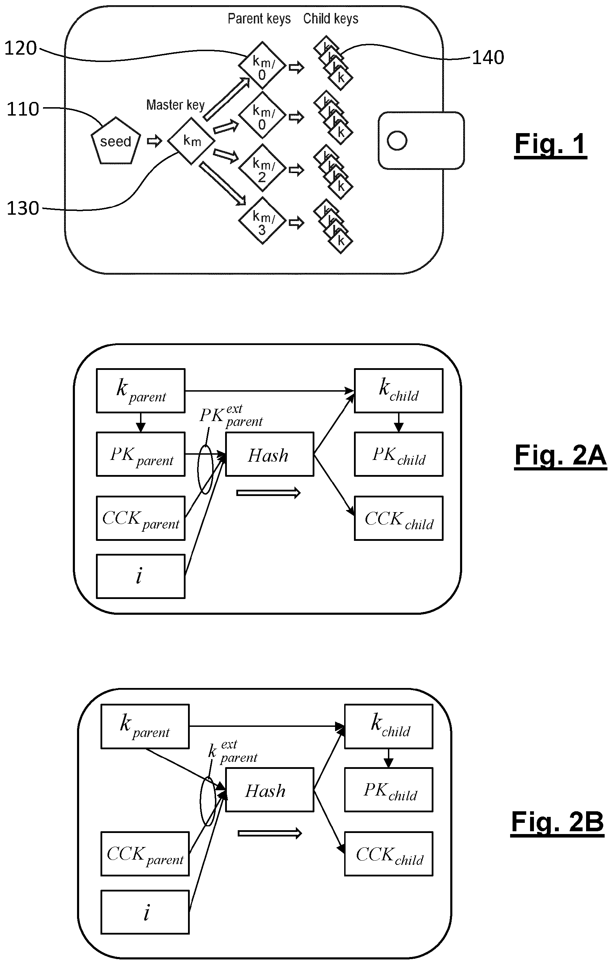

La Fig. 1 représente de manière schématique la structure d'un tel portefeuille hiérarchique déterministe.

Le germe, 110, à l'origine du portefeuille de clés est un nombre aléatoire (ou entropie), par exemple sur 128 ou 256 bits. Il est généralement représenté par un code mnémonique constitué de 12 ou 24 mots tirés d'un dictionnaire prédéterminé comportant un nombre de mots prédéterminé (2048).

Le germe est ensuite haché (par exemple au moyen de la fonction de hachage HMAC-SHA 512), pour fournir d'une part une clé privée maîtresse, 120, ($k_m$) et un code de chaîne associé (non représenté).

La clé publique maîtresse est ensuite calculée à partir de la clé privée maîtresse au moyen de $PK_m = k_m.G$ où $G$ est le point générateur de la courbe elliptique.

A chaque génération, on obtient à partir d'une clé privée parent, 130, du code de chaîne associée à cette clé et d'un numéro d'index, $i$, une clé privée enfant, 140, de rang de naissance $i + 1$ (le premier enfant correspondant à l'indice nul). La génération de la clé privée fait intervenir une fonction de hachage (ou une combinaison de fonctions de hachage) interdisant de pouvoir remonter à une clé privée parent à partir de la clé privée d'un enfant.

La génération des clés privées dans un portefeuille hiérarchique déterministe peut être réalisée selon différentes méthodes.

La Fig. 2A représente une première méthode de génération de clés privées dans un portefeuille hiérarchique déterministe.

On a représenté à gauche de la figure les éléments relatifs à une clé privée parent et à droite ceux relatifs à une clé privée enfant, issue de cette clé privée parent.

La clé privée parent, $k_{parent}$, permet tout d'abord de générer la clé publique correspondante du cryptosystème asymétrique, par exemple $PK_{parent} = k_{parent}G$ dans le cas d'un cryptosystème sur courbe elliptique.

La clé publique parent $PK_{parent}$ est concaténée à la chaîne de code, $CCK_{parent}$, associée pour former une clé publique étendue $PK_{parent}^{ext} = PK_{parent} \big| CCK_{parent}$. Cette clé publique étendue est combinée avec l'index, i,de la clé enfant que l'on souhaite générer, puis l'ensemble est haché au moyen d'une fonction de hachage, *Hash*.

Le résultat du hachage est divisé en une partie gauche et une partie droite. La partie gauche est combinée avec la clé privée parent, $k_{parent}$, pour donner la clé privée enfant, $k_{child}$ tandis que la partie droite donne la chaîne de code associée à la clé enfant, soit $CCK_{child}$. La clé privée enfant, $k_{child}$, permet de générer la clé publique enfant, $PK_{child} = k_{child}G$.

On dispose par conséquent des éléments $k_{child}$, $PK_{child}$, $CCK_{child}$ permettant d'itérer une nouvelle fois la génération de clés privées.

L'opération de génération permettant de passer d'une clé privée parent à une clé enfant d'indice $i$ est notée ici $CKD^n_{priv}$. Autrement dit :

$$k_{child} = CKD^n_{priv}\left(k_{parent}, i\right) \quad \rightarrow \quad \rightarrow \quad \rightarrow \quad \rightarrow \quad \rightarrow \quad \rightarrow \quad \rightarrow \quad (1)$$

et donc, par récurrence :

$$k_{child} = CKD^n_{priv}\left(...CKD^n_{priv}\left(CKD^n_{priv}\left(k_m, i_1\right), i_2\right)\right), ..., i_N\right) \quad \rightarrow \quad \rightarrow \quad \rightarrow \quad (2)$$

où $N$ est la longueur du chemin dans l'arborescence à compter du germe, et où $i_1,...,i_N$ est la succession des indices des clés enfants le long du chemin.

La Fig. 2B représente une seconde méthode de génération de clés privées dans un portefeuille hiérarchique déterministe.

Cette méthode de génération, dite renforcée (*hardened*), par opposition à la méthode précédente, dite normale, utilise une clé privée étendue au lieu d'une clé publique étendue pour générer une clé privée de la génération suivante. Elle est *a priori* plus robuste que la méthode normale puisqu'elle omet du calcul une information publique.

Comme précédemment, on a représenté à gauche de la figure les éléments relatifs à une clé privée parent et à droite ceux relatifs à une clé privée enfant, issue de cette clé privée parent.

La clé privée parent, $k_{parent}$, est concaténée avec la chaîne de code associée pour former une clé privée étendue $k^{ext}_{parent} = k_{parent}\big|CCk_{parent}$.

Cette clé privée étendue est combinée avec l'indice, $i$, de la clé enfant que l'on souhaite générer, puis l'ensemble est haché au moyen d'une fonction de hachage, *Hash.*

Le résultat du hachage est divisé en une partie gauche et une partie droite. La partie gauche est combinée comme précédemment avec la clé privée parent, $k_{parent}$, pour donner la clé privée enfant, $k_{child}$ tandis que la partie droite donne la chaîne de code associée à la clé enfant, soit $CCK_{child}$. La clé privée enfant, $k_{child}$ permet à son tour de générer la clé publique enfant, $PK_{child} = k_{child}G$.

L'opération de génération permettant de passer d'une clé privée parent à une clé enfant d'indice $i$ est appelée opération de génération renforcée et notée $CKD^h_{priv}$. Autrement dit :

$$k_{child} = CKD^h_{priv}\left(k_{parent}, i\right) \quad \rightarrow \quad \rightarrow \quad \rightarrow \quad \rightarrow \quad \rightarrow \quad \rightarrow \quad \rightarrow \quad (3)$$

Si l'on n'utilise que des opérations de génération renforcée, on obtient par récurrence :

$$k_{child} = CKD^h_{priv}\left(...CKD^h_{priv}\left(CKD^h_{priv}\left(k_m, i_1\right), i_2\right)\right), ..., i_N\right) \quad \rightarrow \quad \rightarrow \quad \rightarrow \quad (4)$$

où, comme précédemment $N$ est la longueur du chemin dans l'arborescence à compter du germe, et où $i_1,...,i_N$ est la succession des indices des clés enfants le long du chemin.

On notera que la génération d'une clé privée du portefeuille peut faire intervenir successivement des opérations de génération normale et des opérations de génération renforcée le long du chemin. Ainsi, plus généralement, cette clé privée sera obtenue par :

$$k_{child} = CKD_{priv}\left(...CKD_{priv}\left(CKD_{priv}\left(k_m, i_1\right), i_2\right)\right), ..., i_N\right) \quad \rightarrow \quad \rightarrow \quad \rightarrow \quad (5)$$

où chaque opération de génération élémentaire $CKD_{priv}$ peut être une opération de génération normale $CKD_{priv}^n$ ou une opération de génération renforcée $CKD_{priv}^h$.

De manière pratique, les indices $i$ utilisés dans les opérations de génération normale et les opérations de génération renforcée prennent leurs valeurs dans des intervalles distincts. Ainsi, les indices allant de 0 à $2^{31} - 1$ sont utilisés pour générer des clés privées selon une opération de génération normale et les indices allant de $2^{31}$ à $2^{32} - 1$ sont utilisés pour générer des clés privées selon une opération de génération renforcée.

Dans tous les cas, une clé privée pourra être identifiée au moyen d'un chemin dans l'arborescence à partir de la clé maîtresse. Ainsi, par exemple, $k_m$/0/3 désignera la clé privée de seconde génération, 4ème enfant normal de la clé parent, elle-même premier enfant normal de la clé privée maîtresse. De même, $k_m$/0/3' désignera la clé privée de seconde génération, 4ème enfant renforcé de la clé parent, elle-même premier enfant normal de la clé privée maîtresse, où l'on prend pour convention $i' = i + 2^{31}$.

Les portefeuilles hiérarchiques déterministes ont fait l'objet d'une normalisation dans les documents BIP-32 et BIP-44. On pourra trouver une description détaillée des portefeuilles hiérarchiques déterministes dans l'ouvrage de A.M. Antonopoulos et G. Wood intitulé « Mastering Ethereum » publié chez O'Reilly en Déc. 2018, pp. 79-97.

Les portefeuilles hiérarchiques déterministes peuvent être stockés dans des dispositifs physiques, généralement des dispositifs personnels mobiles, par exemple des dongles. Ainsi, lorsqu'un utilisateur souhaite signer une transaction à l'aide de l'une de ses clés privées, il s'authentifie d'abord auprès de son dispositif personnel au moyen d'un code PIN (ou d'un mot de passe) pour déverrouiller son portefeuille, puis sélectionne dans le portefeuille le compte à partir duquel il veut émettre la transaction et enfin signe la transaction avec la clé privée attachée à ce compte en effectuant une action physique, par exemple en appuyant sur un bouton du dispositif personnel en question.

La structure des portefeuilles hiérarchiques déterministes a été normalisée dans la perspective d'une émission épisodique de transactions basées sur des cryptodevises. La structure d'un chemin dans l'arborescence du portefeuille obéit ainsi à un format adapté à ce cas d'usage, défini dans le document BIP-44 par :

m/purpose'/coin_type'/account'/change/address_index

où le champ « m » est relatif à la clé maîtresse, le champ « purpose » est relatif au standard considéré (ici la valeur 44 pour BIP-44), le champ « coin_type » spécifie la cryptodevise utilisée, le champ « account » spécifie un compte à partir duquel l'utilisateur peut subdiviser son portefeuille en sous-comptes, le champ « change » permet de distinguer des adresses de réception (*receiving addresses*) et des adresses de solde (*change addresses*) lorsque la chaîne de blocs le permet (c'est notamment le cas dans Bitcoin mais non dans Ethereum), et enfin le champ « address_index » permet à un utilisateur de distinguer ses différents comptes pour une même cryptodevise.

Cette structure de portefeuille convient bien à des utilisateurs individuels effectuant des opérations ponctuelles en cryptodevises. Elle s'avère toutefois inappropriée lorsque différents utilisateurs effectuent des opérations plus complexes qui doivent être rattachées à une même entité (personne morale, administrateur, par exemple) et contrôlées par cette dernière dans des conditions prédéterminées. Une telle structure de portefeuille permettrait notamment à des opérateurs humains, voire des dispositifs automatiques, d'effectuer des opérations chez des clients, en garantissant l'anonymat des auteurs des transactions vis-à-vis des tiers, tout en permettant la traçabilité et le contrôle de ces transactions par l'entité en question.

Un objet de la présente invention est par conséquent de proposer une méthode de génération et d'utilisation d'un portefeuille déterministe de clés privées permettant, d'une part, de rattacher à une entité commune les signatures de transactions d'une pluralité d'utilisateurs et, d'autre part, de pouvoir signer ces transactions dans des conditions contrôlées par cette entité.

## EXPOSÉ DE L'INVENTION

La présente invention est définie par une méthode de génération d'un portefeuille de clés hiérarchique déterministe, contenant des clés privées selon une structure arborescente, pour signer notamment des transactions à destination d'une chaîne de blocs, ladite méthode comprenant une phase d'initialisation dans laquelle :

- on crée un compte administrateur, l'accès au compte administrateur étant protégé par un élément d'authentification de l'administrateur;
- on génère une clé privée maîtresse par hachage d'un germe aléatoire, la clé privée maîtresse étant stockée dans une zone mémoire sécurisée; ladite méthode étant spécifique en ce qu'elle comprend en outre une phase de paramétrage dans laquelle :
- on crée, à partir du compte administrateur, une pluralité d'identifiants de contexte d'utilisation, chaque identifiant de contexte d'utilisation pointant vers une adresse de la zone mémoire sécurisée où sont stockées des conditions d'utilisation d'une clé privée dans ledit contexte ;

- on crée, à partir du compte administrateur, une pluralité de comptes utilisateur, chaque compte utilisateur étant associé à une clé privée dans la structure arborescente, chaque compte utilisateur étant identifié par un identifiant et son accès étant protégé par un élément d'authentification de l'utilisateur, la clé privée dudit utilisateur étant obtenue à partir de la clé privée maîtresse, du contexte d'utilisation auquel le compte utilisateur est rattaché, et de l'identifiant de l'utilisateur.

De préférence, la clé privée, $k_{user}$, de l'utilisateur est obtenue au moyen de $k_{user} = CKD_{priv}(CKD_{priv}(CKD_{priv}(k_m,c(i)),Ind_1),Ind_2)$ où $CKD_{priv}$ désigne une opération de génération normale ou renforcée d'une clé privée enfant à partir d'une clé privée parent dans l'arborescence, $c(i)$ est l'identifiant de contexte d'utilisation auquel est rattaché le compte utilisateur et $Ind_1$, $Ind_2$ représente un couple d'indices extraits d'un résultat de hachage de l'identifiant de l'utilisateur au moyen d'au moins une fonction de hachage.

Selon une première variante, l'opération de génération normale comprend la génération d'une clé publique parent ($PK_{parent}$) à partir de la clé privée parent correspondante ($k_{parent}$), la concaténation avec la clé publique parent d'un code chaîne parent ($CCK_{parent}$) pour obtenir une clé publique étendue ($PK_{parent}^{ext}$), la combinaison de ladite clé publique étendue avec un indice de clé enfant ($i$) que l'on souhaite générer, le résultat de ladite combinaison étant haché pour fournir un résultat de hachage, une première partie du résultat de hachage étant combinée avec la clé privée parent pour donner la clé privée enfant, une seconde partie du résultat de hachage fournissant un code chaîne enfant ($CCK_{child}$).

Selon une seconde variante, l'opération de génération renforcée comprend la concaténation avec la clé privée parent ($k_{parent}$) d'un code chaîne parent ($CCk_{parent}$) pour obtenir une clé privée étendue ($PK_{parent}^{ext}$), la combinaison de ladite clé privée étendue avec un indice de clé enfant ($i$) que l'on souhaite générer, le résultat de ladite combinaison étant haché pour fournir un résultat de hachage, une première partie du résultat de hachage étant combinée avec la clé privée parent pour donner la clé privée enfant, une seconde partie du résultat de hachage fournissant un code chaîne enfant ($CCk_{child}$).

Les conditions d'utilisation stockées en relation avec un contexte d'initialisation peuvent être choisies parmi une zone géographique prédéterminée, une plage temporelle prédéterminée, une association avec un dispositif hôte prédéterminée ou une connexion à un réseau prédéterminé.

On pourra générer à partir de la clé privée de l'utilisateur, la clé publique correspondante ($PK_{user}$) de l'utilisateur dans un cryptosystème asymétrique et effectuer un hachage de cette clé publique utilisateur pour obtenir une adresse de compte utilisateur ($account_{user}$), l'adresse de compte utilisateur étant stockée dans le compte utilisateur.

La présente invention concerne également l'utilisation d'un portefeuille de clés hiérarchique déterministe généré par une méthode de génération telle que définie plus haut, pour signer une transaction à destination d'une chaîne de blocs, ledit portefeuille ayant été paramétré pour au moins un utilisateur et étant hébergé sur un dispositif mobile connecté à un dispositif hôte via un canal sécurisé, l'utilisation de ce portefeuille de clés hiérarchique déterministe étant spécifique en ce que:

- ledit utilisateur s'identifie au moyen de son identifiant d'utilisateur et s'authentifie au moyen d'un élément d'authentification, auprès du dispositif mobile ou du dispositif hôte ;
- ledit utilisateur renseigne un identifiant de contexte d'utilisation, auprès du dispositif mobile ou du dispositif hôte ;
- le dispositif mobile effectue un hachage de l'identifiant et en déduit un au moins un index ($Ind_1$, $Ind_2$), vérifie dans le portefeuille l'existence d'un compte utilisateur associé au contexte d'utilisation et à l'index ainsi obtenu, puis vérifie que l'élément d'authentification de l'utilisateur est bien celui stocké dans une zone mémoire sécurisée du dispositif mobile, à une adresse spécifiée par le compte utilisateur; et, en cas de succès,
- vérifie si des données de contexte fournies par un capteur du dispositif mobile remplissent bien les conditions d'utilisation stockées dans la zone mémoire sécurisée à une adresse stockée dans le compte utilisateur; et, si ces conditions sont remplies,
- signe une transaction formée par le dispositif hôte au moyen de la clé privée utilisateur, la transaction ainsi signée étant retournée au dispositif hôte pour être transmise à la chaîne de blocs.

Selon une première variante, la signature de la transaction au moyen de la clé privée utilisateur est effectuée de manière automatique par le dispositif hôte, sans intervention de l'utilisateur.

Selon une seconde variante, la signature de la transaction au moyen de la clé privée utilisateur requiert en outre une action physique de l'utilisateur sur un élément du dispositif mobile.

Dans tous les cas, la transaction est généralement émise à partir de l'adresse de compte utilisateur obtenue par hachage de la clé publique utilisateur stockée dans le compte utilisateur.

## BRÈVE DESCRIPTION DES DESSINS

D'autres caractéristiques et avantages de l'invention apparaîtront à la lecture d'un mode de réalisation préférentiel de l'invention, décrit en référence aux figures jointes parmi lesquelles :

[Fig. 1], déjà décrite, représente de manière schématique la structure d'un portefeuille de clés de type hiérarchique déterministe ;

[Fig. 2A] et

[Fig. 2B] illustrent de manière schématique une première et une seconde méthodes de génération connues de clés privées dans un portefeuille de clés de type hiérarchique déterministe ;

[Fig. 3] représente de manière schématique la structure d'un portefeuille de clés pouvant être généré par la méthode de génération de portefeuille selon la présente invention ;

[Fig. 4] représente l'ordinogramme d'une phase d'initialisation dans une méthode de génération de portefeuille de clés selon un mode de réalisation de l'invention ;

[Fig. 5] représente l'ordinogramme d'une phase de paramétrage dans une méthode de génération de portefeuille de clés selon un mode de réalisation de l'invention ;

[Fig. 6] représente de manière schématique la structure d'un dispositif mobile embarquant un portefeuille de clés, selon un mode de réalisation de l'invention ;

[Fig. 7] représente un exemple d'utilisation d'un dispositif mobile hébergeant un portefeuille de clés, selon un mode de réalisation de l'invention.

## EXPOSÉ DÉTAILLÉ DE MODES DE RÉALISATION PARTICULIERS

Nous considérerons dans la suite un portefeuille de clés hiérarchique déterministe (HD) au sens précédent, notamment un portefeuille conforme aux standards BIP-32 et BIP-44. Un tel portefeuille possède une structure arborescente dans laquelle une clé privée, associée à un nœud $v$ de l'arborescence, est générée au moyen d'une fonction de hachage à partir de la clé publique étendue ou privée étendue associée au nœud parent de $v$ et d'un indice, $i$, donnant le rang de naissance de la clé comme décrit en relation avec les Figs. 2A et 2B.

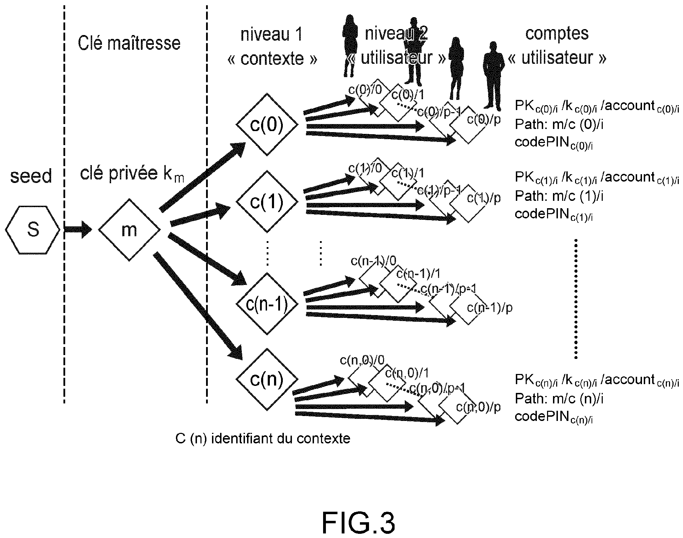

La Fig. 3 représente de manière schématique la structure d'un portefeuille de clés HD pouvant être généré dans le cadre de la présente invention.

Le niveau « 0 » de la structure arborescente, ou racine, correspond à une clé privée maîtresse, $k_m$, obtenue à partir du hachage d'un germe aléatoire (ou entropie), avantageusement codé sous la forme d'un code mnémonique. Le hachage peut être réalisé par une fonction de hachage voire une combinaison de telles fonctions. Le résultat du hachage fournit, d'une part, la clé privée maitresse et, d'autre part, un code de chaîne, $CCk_m$, associé à cette même clé. La clé publique maîtresse, $PK_m$, est obtenue à partir de la clé privée maîtresse au moyen d'un algorithme de cryptographie asymétrique (par exemple $PK_m = k_m.G$ pour un algorithme de cryptographie sur courbe elliptique).

Au niveau « 0 » de la structure arborescente peut être créé un compte administrateur, dont l'accès est protégé par un élément d'authentification administrateur (code PIN ou mot de passe administrateur).

Le compte administrateur peut être associé à la clé privée maîtresse, $k_m$, ainsi qu'à la clé publique maîtresse correspondante, $PK_m = k_m.G$, et est identifié par un identifiant du compte administrateur ($login_{adm}$). Le compte administrateur contient une adresse dans une zone mémoire sécurisée où est stocké l'élément d'authentification administrateur comme décrit plus loin.

Alternativement, le compte administrateur pourra être associé à un nœud situé plus bas dans la structure arborescente.

L'accès au compte administrateur permet de créer une pluralité d'identifiants de contexte, au niveau « 1 » de l'arborescence, chaque identifiant de contexte pointant vers une zone mémoire associée dans laquelle sont stockées des conditions d'utilisation d'une clé privée dans ledit contexte.

Les identifiants de contexte sont notés $c(1)$, ..., $c(n)$, chaque identifiant de contexte pointant vers une zone mémoire dans laquelle sont stockées des conditions dans lesquelles une clé privée est autorisée à être utilisée.

Un contexte d'utilisation pourra être notamment une zone géographique, une plage temporelle, une association à un dispositif hôte, une connexion à un réseau etc.

Les conditions d'utilisation relatives à une zone géographique pourront être par exemple de se trouver ou non dans un périmètre donné.

Les conditions d'utilisation relatives à une plage temporelle pourront être de se trouver ou non à l'intérieur de cette plage temporelle.

Une condition d'association à un dispositif hôte ou de connexions un réseau pourra être d'être associé avec ce dispositif ou connecté à ce réseau.

Bien entendu, les contextes d'utilisation peuvent être composites et comprendre des combinaisons de conditions de plusieurs types. Par exemple, l'utilisation d'une clé privée pourra n'être autorisée que dans un certain périmètre et dans une certaine plage temporelle.

La connexion au compte administrateur permet en outre de créer des comptes utilisateurs au niveau « 2 » de l'arborescence. En règle générale, chaque compte utilisateur est associé à un contexte d'utilisation. Dans certains cas cependant, un compte utilisateur pourra ne pas être associé à un contexte, que celui-ci soit considéré comme implicite ou défini par défaut, ou que le compte utilisateur soit par exemple lui-même un compte administrateur, délégataire d'un compte administrateur situé à un plus haut niveau dans l'arborescence.

Chaque compte utilisateur possède un identifiant ($login_{user}$) et son accès est protégé par un élément d'authentification (par exemple un code PIN ou un mot de passe).

L'identifiant d'un compte d'utilisateur est haché au moyen d'une fonction de hachage (ou d'une combinaison de fonctions de hachage) et le résultat du hachage fournit un index, $Ind$, ou bien, comme nous le supposerons dans la suite, un couple d'index, $Ind_1$, $Ind_2$, servant à générer la clé privée, $k_{user}$, de l'utilisateur :

$$\left( Ind_1, Ind_2 \right) = Hash\left( login_{user} \right) \qquad (6)$$

La clé privée de l'utilisateur $k_{user}$ est obtenue au moyen d'opérations de génération normale ou renforcée à partir des indices des clés enfants le long du chemin, soit:

$$k_{user} = CKD_{priv}\left( CKD_{priv}\left( CKD_{priv}\left( k_m, c(i) \right), Ind_1 \right) \right), Ind_2 \right) \qquad (7)$$

Comme précédemment des opérations de génération normale et des opérations de génération renforcée peuvent être successivement envisagées le long du chemin dans l'arborescence.

A partir de la clé privée $k_{user}$, la clé publique correspondante du cryptosystème asymétrique est générée, soit par exemple, dans le cas d'un cryptosystème sur courbe elliptique $PK_{user} = k_{user}G$.

La clé privée, $k_{user}$, est stockée à une adresse mémoire dans une zone sécurisée, figurant dans le compte de l'utilisateur.

L'adresse du compte de l'utilisateur, à partir de laquelle, l'utilisateur pourra émettre des transactions vers une chaîne de blocs, est obtenue par hachage de la clé publique $PK_{user}$, au moyen d'une fonction de hachage ou d'une combinaison de fonctions de hachage.

$$account_{user} = Hash\left( PK_{user} \right) \cdot \qquad (8)$$

où $Hash$ correspond à la fonction de hachage ou la combinaison de fonctions de hachage. Par exemple, on prendra $keccack256$ comme fonction de hachage pour l'obtention d'une adresse de compte ethereum et la combinaison des fonctions $sha256$ et $ripemd160$ pour obtenir une adresse bitcoin, de manière connue en soi.

En résumé, le compte d'un utilisateur est associé à un chemin dans l'arborescence :

$$path = m\,/\,c(i)\,/\,Ind_1\,/\,Ind_2 \qquad (9)$$

permettant de générer la clé privée de cet utilisateur selon la relation (7).

Bien que la structure arborescente de la Fig. 3 présente une profondeur $N = 3$, il convient de noter que des structures arborescentes de plus grande profondeur peuvent être aussi envisagées. Par exemple, un chemin peut se conformer au format BIP-44 pour les premiers niveaux, se poursuivre par un niveau de contexte et enfin, se terminer par un niveau utilisateur, c'est-à-dire à un niveau compte utilisateur (ou, de manière équivalente de clé privée utilisateur). De manière générale, le chemin vers le compte utilisateur dans la structure arborescente sera défini par :

$$path = m\,/\,....\,/\,c(i)\,/\,Ind_1\,/\,Ind_2 \qquad (10)$$

Le compte utilisateur contient la clé privée maîtresse, $k_{user}$, la clé publique maitresse correspondante, $PK_{user}$

= $k_{user}.G$ ainsi que l'identifiant du compte utilisateur ($login_{user}$). Le compte utilisateur contient en outre une adresse dans une zone mémoire sécurisée à laquelle est stocké un élément d'authentification de l'utilisateur, comme précisé plus loin.

La génération du portefeuille HD comporte une phase d'initialisation effectuée par un administrateur du portefeuille et une phase de paramétrage pour au moins un utilisateur.

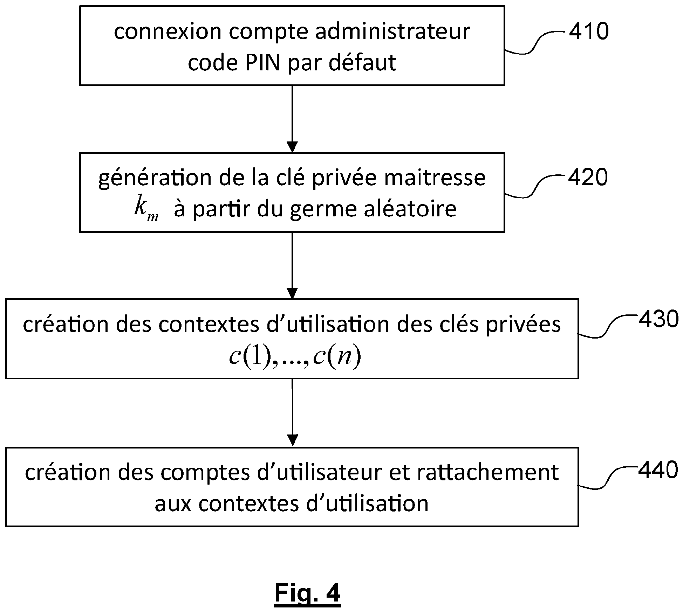

La Fig. 4 représente l'ordinogramme d'une phase d'initialisation d'un portefeuille de clés hiérarchique déterministe selon un mode de réalisation de l'invention.

L'administrateur du portefeuille est chargé de configurer les comptes des différents utilisateurs et notamment d'indiquer dans quelles conditions ces utilisateurs peuvent utiliser leurs clés privées.

Le compte administrateur peut correspondre à un chemin par défaut dans l'arborescence. Par exemple, le compte utilisateur d'index nul et d'identifiant de contexte nul (absence de contexte) pourra être attribué par défaut à l'administrateur. Le compte administrateur sera alors caractérisé par $Ind_1 = 0$, $Ind_2 = 0$, $c(i) = 0$ et le chemin défini par $m/..../0/0/0$. Il est important de noter que dans un tel cas le compte administrateur n'est pas situé au niveau 0 de l'arborescence, ce qui peut être préféré pour des raisons de sécurité. Un code PIN par défaut est également attribué à l'administrateur.

A l'étape 410, lors de la première connexion, l'administrateur se connecte à son compte en s'authentifiant à l'aide du code PIN par défaut. Il modifie ensuite son code PIN pour les accès ultérieurs.

A l'étape 420, l'administrateur génère la clé privée maîtresse, $k_m$, à partir du germe aléatoire ainsi que la clé publique maitresse correspondante, $PK_m$.

Lors de sa première connexion ou lors d'un accès ultérieur, l'administrateur peut créer en 430 des contextes d'utilisation de clés privées, $c(1)$, $c(2)$, ..., $c(n)$, en spécifiant pour chaque contexte les conditions dans lesquelles les clés peuvent être utilisées. Les conditions associées à un contexte $c(i)$ sont stockées dans une zone mémoire pointée par $c(i)$.

Ainsi, par exemple, un premier contexte pourra correspondre à un contexte géographique et les conditions d'utilisation associées pourront spécifier une zone prédéterminée autour d'un point de référence. Un second contexte pourra correspondre à un contexte temporel et les conditions d'utilisation associées pourront spécifier une plage temporelle prédéterminée $[T_{min}, T_{max}]$.

L'administrateur peut ensuite créer en 440, un compte d'utilisateur en le rattachant à l'un des contextes précités ou bien encore, dans certains cas, en ne le rattachant à aucun (contexte d'utilisation par défaut ou contexte implicite). Le compte d'utilisateur se voit attribuer un identifiant, $login_{user}$, ainsi qu'un élément d'authentification (code PIN) par défaut qui pourra être personnalisé lors de la première connexion.

Dans certains cas, l'administrateur pourra déléguer une partie de ses prérogatives à un administrateur secondaire.

Par exemple, l'administrateur du portefeuille pourra créer des contextes généraux d'utilisateur et déléguer à des administrateurs secondaires la possibilité de créer des contextes d'utilisation particuliers. Ainsi, par exemple, on peut envisager qu'un administrateur délègue ses droits de création de contexte d'utilisation géographique à des administrateurs régionaux, chacun des administrateurs régionaux ne pouvant alors créer des contextes d'utilisation que dans la région dont il a la responsabilité.

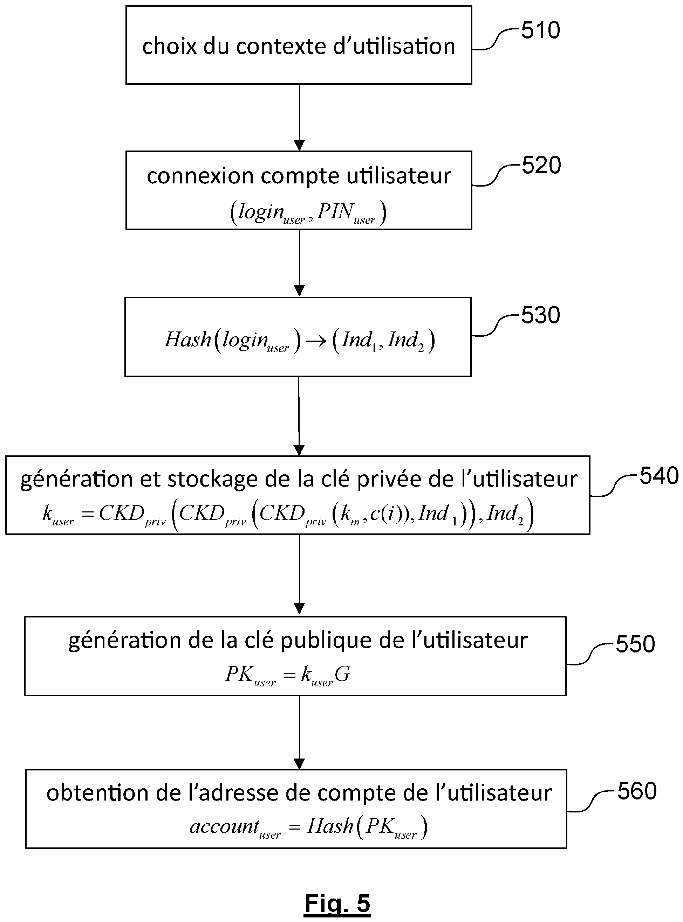

La Fig. 5 représente l'ordinogramme d'une phase de paramétrage d'un portefeuille de clés selon un mode de réalisation de l'invention.

Cette phase de paramétrage suppose que la phase d'initialisation du portefeuille ait été précédemment exécutée par l'administrateur.

A l'étape 510, l'utilisateur est invité à choisir le contexte d'utilisation dans lequel il souhaite opérer. Cette étape peut être optionnelle si le contexte est sélectionné par défaut ou bien s'il est fourni par un dispositif externe.

A l'étape, 520, l'utilisateur se connecte à son compte en fournissant son identifiant et son élément d'authentification. Il convient de noter qu'un utilisateur peut disposer d'une pluralité de comptes sous différents contextes.

Lors de la première connexion, l'élément d'authentification est celui qui lui a été octroyé par défaut par l'administrateur. Il est alors invité à personnaliser son élément d'authentification de manière connue en soi.

A l'étape 530, après que l'utilisateur se soit identifié et que l'élément d'authentification ait été vérifié avec succès, l'identifiant de l'utilisateur est soumis à une fonction de hachage (ou une combinaison de fonctions de hachage). Du résultat de hachage est extrait l'index, $Ind$, ou le couple d'index, $Ind_1$, $Ind_2$ permettant de générer sa clé privée.

A l'étape 540, la clé privée de l'utilisateur est générée au moyen d'opérations de génération normale ou renforcée, au sens précité, à partir de la clé maitresse privée et des indices des nœuds le long du chemin. Par exemple, la clé privée pourra être générée au moyen de l'expression (7) lorsque seules interviennent des opérations de génération normale.

La clé privée de l'utilisateur est alors stockée dans une zone de mémoire sécurisée associée au compte de l'utilisateur.

A l'étape 550, on génère la clé publique correspondante de l'utilisateur dans un cryptosystème asymétrique, par exemple $PK_{user} = k_{user}.G$, comme décrit plus haut.

A l'étape 560, l'adresse de compte de l'utilisateur est obtenue par hachage de la clé publique, $account_{user}$ = $Hash(PK_{user})$. Cette adresse de compte peut être utilisée par l'utilisateur pour émettre des transactions à destination d'une chaîne de blocs, sous réserve de satisfaire aux conditions spécifiées dans le contexte d'utilisation.

Ainsi par exemple, lorsque l'utilisateur a préalablement formé une transaction et souhaite la signer au moyen de sa clé privée pour la transmettre à la chaîne de blocs, celui-ci ouvre son application de portefeuille, accède à son compte utilisateur dans le contexte choisi, s'identifie et s'authentifie comme décrit précédemment.

La génération de la clé privée et la signature de la transaction peuvent être exécutées consécutivement, lors d'une même session. Autrement dit, la clé privée peut être générée et la transaction peut être signée automatiquement dès lors que les conditions d'utilisation sont remplies lors de cette session. Le paramétrage et la signature par la clé privée ont alors lieu au sein de la même session.

Alternativement, la génération de la clé privée peut avoir eu lieu lors de la première connexion de l'utilisateur et la signature n'intervenir que lors d'une session ultérieure, si les conditions d'utilisation sont bien remplies lors de cette session. Le paramétrage et la signature par la clé privée ont alors lieu dans des sessions distinctes.

Selon une variante, la signature de la transaction pourra requérir, outre la satisfaction des conditions d'utilisation du contexte, une action physique de l'utilisateur pour valider la signature de la transaction. Par exemple, si le portefeuille de clés est hébergé dans un dispositif mobile, tel qu'un dongle équipé d'un bouton poussoir, une pression de l'utilisateur sur le bouton en question pourra permettre de valider la signature.

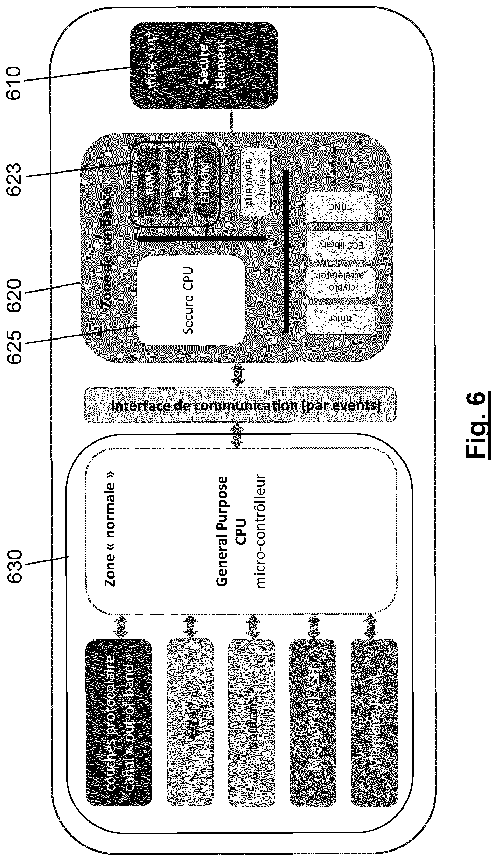

La Fig. 6 représente de manière schématique la structure d'un dispositif mobile embarquant un portefeuille de clés, selon un mode de réalisation de l'invention.

A titre d'illustration, ce dispositif mobile pourra être un smartphone, une badgeuse ou bien un dongle équipé d'une interface IHM (écran et boutons).

Dans tous les cas, ce dispositif est composé de différentes parties présentant des niveaux de sécurité distincts.

Une première partie de haut niveau de sécurité est constituée par un coffre-fort matériel ou SE (*Secure Element*), 610, dans laquelle sont stockés le germe aléatoire et les éléments d'authentification (codes PIN, mots de passe) de l'administrateur et de l'utilisateur (voire de plusieurs utilisateurs).

Une seconde partie, 620, est constituée par une zone de confiance comprenant, d'une part, une zone mémoire sécurisée, 623, et, d'autre part, une zone d'exécution sécurisée.

Dans la mesure du possible, la clé privée maitresse et les clés privées des utilisateurs, respectivement générées lors de la phase d'initialisation et de la phase d'utilisation, sont stockées dans le coffre-fort matériel, 610. A défaut, elles seront enregistrées dans la zone mémoire sécurisée, 623. Compte tenu de ces deux options, la zone mémoire sécurisée sera considérée comme pouvant s'étendre à la mémoire du coffre-fort matériel.

La zone mémoire sécurisée (au sens étendu précédent) contient également les conditions des différents contextes d'utilisation des clés privées relatives aux différents utilisateurs. Plus précisément, chaque identifiant de contexte $c(i)$ pointe vers une adresse à laquelle sont stockées les conditions d'utilisation correspondantes.

La zone d'exécution sécurisée (*Trusted Execution Environment*) comprend notamment un processeur sécurisé, 625, un générateur entropique, un accélérateur cryptographique, etc. A l'intérieur de cette zone peuvent notamment être exécutées les fonctions cryptographiques telles que la génération de la clé maitresse à partir du germe aléatoire, les opérations élémentaires de génération normale et renforcée de clé privée $CKD_{priv}^{n}$ et $CKD_{priv}^{h}$, le calcul d'une clé publique correspondant à une clé privée, la signature numérique d'une transaction au moyen d'une clé privée d'utilisateur (par exemple au moyen de l'algorithme ECDSA), la vérification que les conditions d'un contexte d'utilisation sont bien satisfaites.

Le dispositif mobile comporte en outre une troisième partie, 630, non sécurisée, dite zone normale, comprenant un microprocesseur ou un microcontrôleur, des mémoires RAM et ROM. Cette troisième partie comporte en outre une interface IHM (écran, boutons, etc.) permettant à l'administrateur et à un utilisateur de dialoguer avec l'application de génération de portefeuille respectivement dans la phase d'initialisation et d'utilisation.

L'homme du métier comprendra que l'administrateur initialise d'abord le dispositif mobile comme décrit en relation avec la Fig. 4 et que celui-ci est ensuite paramétré et utilisé ensuite comme décrit en relation avec la Fig. 5. Un tel dispositif peut être personnel à un utilisateur ou être commun à plusieurs utilisateurs, chaque utilisateur disposant de son compte spécifique (ou de ses comptes spécifiques dans différents contextes). En cas de perte, il est facile de regénérer l'ensemble de l'arborescence dès lors que l'on connaît le germe aléatoire (ou le code mnémonique), les identifiants de l'administrateur et des utilisateurs, ainsi que les contextes d'utilisation. Il convient de noter que, quand bien même un hacker, arriverait à régénérer ladite arborescence ou à accéder à un compte spécifique, il ne pourrait utiliser le(s) compte(s) spécifique(s) dans la mesure où les éléments d'authentification sont eux-mêmes protégés.

En outre, il sera quasi-impossible à un tiers extérieur à l'entité à laquelle appartiennent l'administrateur/ les utilisateurs de tracer par corrélation des transactions signées par un même utilisateur. En revanche, l'administrateur pourra aisément s'assurer que les transactions ont bien été signées par les utilisateurs autorisés dans les contextes d'utilisation requis.

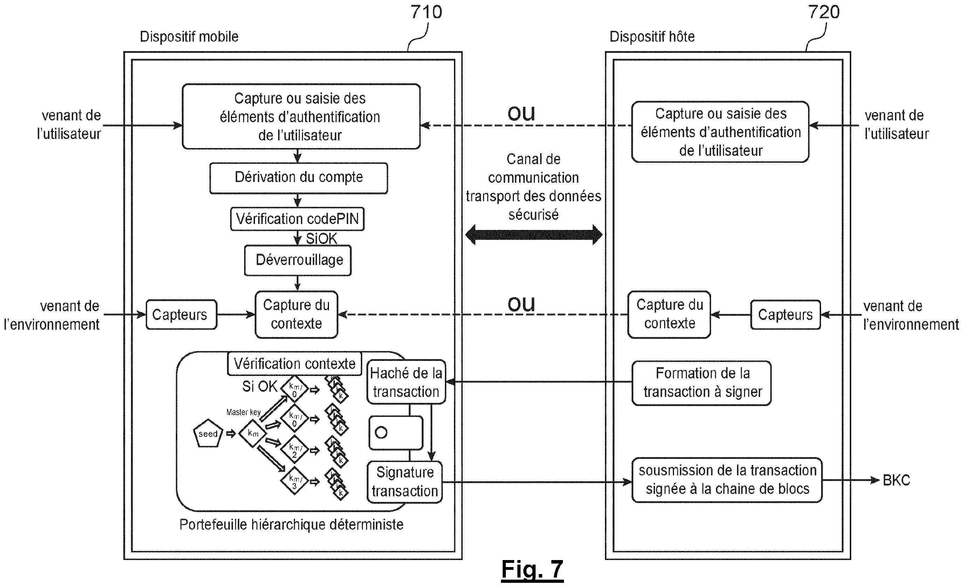

La Fig. 7 représente un exemple d'utilisation d'un objet mobile hébergeant un portefeuille de clés, selon un mode de réalisation de l'invention.

Cet exemple d'utilisation fait intervenir un dispositif mobile, 710, du type illustré en Fig. 6 ainsi qu'un dispositif hôte, 720, hébergeant un client léger de la chaîne de blocs.

On suppose que le portefeuille de clés privées a été initialisé dans le dispositif mobile et, le cas échéant paramétré par un utilisateur.

Lorsque cet utilisateur souhaite signer une transaction avec sa clé privée pour la transmettre à la chaîne de blocs, il ouvre une session sur le dispositif mobile en saisissant son identifiant (login) et son/ses élément(s) d'authentification (code PIN, mot de passe). Alternativement, l'utilisateur peut s'authentifier auprès du dispositif mobile au moyen d'une clé conforme au protocole FIDO2. Optionnellement, le dispositif mobile peut être configuré pour requérir une authentification multifactorielle.

Selon une variante, l'utilisateur peut s'identifier et s'authentifier auprès du dispositif hôte, l'identifiant et les éléments d'authentification étant alors transmis au dispositif mobile au moyen d'un canal sécurisé.

Dans la plupart des cas, l'utilisateur est invité, avant ou après s'être identifié et authentifié, à renseigner l'identifiant du contexte d'utilisation dans lequel il souhaite opérer. Comme précédemment, cet identifiant peut être saisi sur le dispositif mobile ou le dispositif hôte. Dans certains cas, le contexte d'utilisation pourra être un contexte d'utilisation par défaut, par exemple se déduire de l'application lancée par l'utilisateur ou de la proximité du dispositif hôte.

L'application de portefeuille qui réside sur le dispositif mobile, effectue un hachage de l'identifiant de l'utilisateur ($login_{user}$) et en déduit un index ou un couple d'index ($Ind_1$, $Ind_2$). Elle vérifie ensuite l'existence d'un compte utilisateur associé au contexte d'utilisation et à l'index ou au couple d'index ainsi obtenu, puis vérifie que le code PIN saisi est bien celui stocké dans la zone mémoire sécurisée, à l'adresse stockée dans le compte utilisateur.

En cas d'échec de l'identification (absence de compte dans le contexte) ou de l'authentification (élément d'authentification erroné), le dispositif mobile le signale à l'utilisateur.

En cas de succès, l'accès au compte est déverrouillé et l'utilisateur peut utiliser son compte utilisateur pour signer une transaction avec sa clé privée.

Plus précisément, l'application de portefeuille vérifie d'abord que les conditions de contexte sont bien satisfaites. Pour ce faire, un capteur présent dans le dispositif mobile ou bien le dispositif hôte fournit des données de contexte (par exemple position GPS, temps, identifiant de borne Wi-Fi, identifiant BLE etc.) et ces données sont comparées aux conditions en question, stockées dans la zone mémoire sécurisée, à une adresse stockée dans le compte utilisateur.

Lorsque les conditions de contexte ne sont pas remplies, un message d'erreur est affiché sur le dispositif mobile. A l'inverse, lorsque les conditions en question sont bien remplies, la transaction formée par l'utilisateur sur le dispositif hôte est fournie à l'application de portefeuille.

La transaction peut être alors être signée automatiquement par la clé privée de l'utilisateur. Celle-ci peut être générée dynamiquement (par exemple au moyen de l'expression (7)) si elle n'est pas déjà stockée dans la zone de confiance, ou bien lue de la zone de confiance si elle a déjà été générée lors d'une session précédente.

Selon une variante, la signature par la clé privée peut requérir en outre une action physique de l'utilisateur, par exemple d'appuyer sur un bouton du dispositif mobile pour valider la signature de la transaction.

La transaction ainsi signée est ensuite renvoyée vers le dispositif hôte qui le transmet à la chaîne de bloc à partir de l'adresse de compte de l'utilisateur.


## Revendications

1. Méthode de génération d'un portefeuille de clés hiérarchique déterministe, contenant des clés privées selon une structure arborescente, pour signer notamment des transactions à destination d'une chaîne de blocs, ladite méthode comprenant une phase d'initialisation dans laquelle :

   - on crée un compte administrateur, l'accès au compte administrateur étant protégé par un élément d'authentification de l'administrateur;
   - on génère une clé privée maîtresse (420) par hachage d'un germe aléatoire, la clé privée maîtresse étant stockée dans une zone mémoire sécurisée d'un dispositif mobile ; **caractérisée en ce qu'**elle comprend en outre une phase de paramétrage dans laquelle :
   - on crée (430), à partir du compte administrateur, une pluralité d'identifiants de contexte d'utilisation, chaque identifiant de contexte d'utilisation pointant vers une adresse de la zone mémoire sécurisée où sont stockées des conditions d'utilisation d'une clé privée dans ledit contexte ;
   - on crée (440), à partir du compte administrateur, une pluralité de comptes utilisateur, chaque compte utilisateur étant associé à une clé privée dans la structure arborescente, chaque compte utilisateur étant identifié par un identifiant et son accès étant protégé par un élément d'authentification de l'utilisateur, la clé privée dudit utilisateur étant obtenue à partir de la clé privée maîtresse, du contexte d'utilisation auquel le compte utilisateur est rattaché, et de l'identifiant de l'utilisateur.

2. Méthode de génération d'un portefeuille de clés hiérarchique déterministe selon la revendication 1, **caractérisée en ce que** la clé privée, $k_{user}$, de l'utilisateur est obtenue au moyen de $k_{user}$ = $CKD_{priv}(CKD_{priv}(CKD_{priv}(k_m,c(i)),Ind_1)),Ind_2)$ où $CKD_{priv}$ désigne une opération de génération normale ou renforcée d'une clé privée enfant à partir d'une clé privée parent dans l'arborescence, $c(i)$ est l'identifiant de contexte d'utilisation auquel est rattaché le compte utilisateur et $Ind_1$, $Ind_2$ représente un couple d'indices extraits d'un résultat de hachage de l'identifiant de l'utilisateur au moyen d'au moins une fonction de hachage.

3. Méthode de génération d'un portefeuille de clés hiérarchique déterministe selon la revendication 2, **caractérisée en ce que** l'opération de génération normale comprend la génération d'une clé publique parent ($PK_{parent}$) à partir de la clé privée parent correspondante ($k_{parent}$), la concaténation avec la clé publique parent d'un code chaîne parent ($CCK_{parent}$) pour obtenir une clé publique étendue $\left( PK_{parent}^{ext} \right)$, la combinaison de ladite clé publique étendue avec un indice de clé enfant ($i$) que l'on souhaite générer, le résultat de ladite combinaison étant haché pour fournir un résultat de hachage, une première partie du résultat de hachage étant combinée avec la clé privée parent pour donner la clé privée enfant, une seconde partie du résultat de hachage fournissant un code chaîne enfant ($CCK_{child}$).

4. Méthode de génération d'un portefeuille de clés hiérarchique déterministe selon la revendication 2, **caractérisée en ce que** l'opération de génération renforcée comprend la concaténation avec la clé privée parent ($k_{parent}$) d'un code chaîne parent ($CCk_{parent}$) pour obtenir une clé privée étendue $\left( PK_{parent}^{ext} \right)$, la combinaison de ladite clé privée étendue avec un indice de clé enfant ($i$) que l'on souhaite générer, le résultat de ladite combinaison étant haché pour fournir un résultat de hachage, une première partie du résultat de hachage étant combinée avec la clé privée parent pour donner la clé privée enfant, une seconde partie du résultat de hachage fournissant un code chaîne enfant ($CCk_{child}$).

5. Méthode de génération d'un portefeuille de clés hiérarchique déterministe selon l'une des revendications précédentes, **caractérisée en ce que** les conditions d'utilisation stockées en relation avec un contexte d'initialisation sont choisies parmi une zone géographique prédéterminée, une plage temporelle prédéterminée, une association avec un dispositif hôte prédéterminée ou une connexion à un réseau prédéterminé.

6. Méthode de génération d'un portefeuille de clés hiérarchique déterministe selon l'une des revendications précédentes, **caractérisée en ce que** l'on génère à partir de la clé privée de l'utilisateur, la clé publique correspondante ($PK_{user}$) de l'utilisateur dans un cryptosystème asymétrique et que l'on effectue un hachage de cette clé publique utilisateur pour obtenir une adresse de compte utilisateur ($account_{user}$), l'adresse de compte utilisateur étant stockée dans le compte utilisateur.

7. Utilisation d'un portefeuille de clés hiérarchique déterministe généré par une méthode de génération selon l'une des revendications précédentes, pour signer une transaction à destination d'une chaîne de blocs, ledit portefeuille ayant été paramétré pour au moins un utilisateur et étant hébergé sur un dispositif mobile connecté à un dispositif hôte via un canal sécurisé, **caractérisée en ce que** :

- ledit utilisateur s'identifie au moyen de son identifiant d'utilisateur et s'authentifie au moyen d'un élément d'authentification, auprès du dispositif mobile ou du dispositif hôte ;
- ledit utilisateur renseigne un identifiant de contexte d'utilisation, auprès du dispositif mobile ou du dispositif hôte ;
- le dispositif mobile effectue un hachage de l'identifiant et en déduit un au moins un index ($Ind_1$, $Ind_2$), vérifie dans le portefeuille l'existence d'un compte utilisateur associé au contexte d'utilisation et à l'index ainsi obtenu, puis vérifie que l'élément d'authentification de l'utilisateur est bien celui stocké dans une zone mémoire sécurisée du dispositif mobile, à une adresse spécifiée par le compte utilisateur; et, en cas de succès,
- vérifie si des données de contexte fournies par un capteur du dispositif mobile remplissent bien les conditions d'utilisation stockées dans la zone mémoire sécurisée à une adresse stockée dans le compte utilisateur; et, si ces conditions sont remplies,

- signe une transaction formée par le dispositif hôte au moyen de la clé privée utilisateur, la transaction ainsi signée étant retournée au dispositif hôte pour être transmise à la chaîne de blocs.

8. Utilisation d'un portefeuille de clés hiérarchique déterministe selon la revendication 7, **caractérisée en ce que** la signature de la transaction au moyen de la clé privée utilisateur est effectuée de manière automatique par le dispositif hôte, sans intervention de l'utilisateur.

9. Utilisation d'un portefeuille de clés hiérarchique déterministe selon la revendication 7, **caractérisée en ce que** la signature de la transaction au moyen de la clé privée utilisateur requiert en outre une action physique de l'utilisateur sur un élément du dispositif mobile.

10. Utilisation d'un portefeuille de clés hiérarchique déterministe selon la revendication 8 ou 9, **caractérisée en ce que** la transaction est émise à partir de l'adresse de compte utilisateur obtenue par hachage de la clé publique utilisateur stockée dans le compte utilisateur.

**Fig. 1**

**Fig. 2A**

**Fig. 2B**

C (n) identifiant du contexte

FIG.3

connexion compte administrateur
code PIN par défaut — 410

génération de la clé privée maitresse
$k_m$ à partir du germe aléatoire — 420

création des contextes d'utilisation des clés privées
$c(1), ..., c(n)$ — 430

création des comptes d'utilisateur et rattachement
aux contextes d'utilisation — 440

**Fig. 4**

| | |
|---|---|
| choix du contexte d'utilisation | 510 |

$\downarrow$

| | |
|---|---|
| connexion compte utilisateur $(login_{user}, PIN_{user})$ | 520 |

$\downarrow$

| | |
|---|---|
| $Hash(login_{user}) \rightarrow (Ind_1, Ind_2)$ | 530 |

$\downarrow$

| | |
|---|---|
| génération et stockage de la clé privée de l'utilisateur $k_{user} = CKD_{priv}\left(CKD_{priv}\left(CKD_{priv}\left(k_m, c(i)\right), Ind_1\right), Ind_2\right)$ | 540 |

$\downarrow$

| | |
|---|---|
| génération de la clé publique de l'utilisateur $PK_{user} = k_{user}G$ | 550 |

$\downarrow$

| | |
|---|---|
| obtention de l'adresse de compte de l'utilisateur $account_{user} = Hash(PK_{user})$ | 560 |

**Fig. 5**

**Fig. 6**

**Fig. 7**

Europäisches
Patentamt

European
Patent Office

Office européen
des brevets

## RAPPORT DE RECHERCHE EUROPEENNE

Numéro de la demande

EP 20 19 5146

### DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | Anonymous: "Developer Guide - Bitcoin", , 11 mai 2015 (2015-05-11), pages 1-48, XP055519712, Extrait de l'Internet: URL:https://web.archive.org/web/2015051123 2019/https://bitcoin.org/en/developer-guid e [extrait le 2018-10-29] * pages 21,23-26 * ----- | 1-10 | INV. H04L9/08 |
| Y | Kiara Robles ET AL: "Hierarchical Deterministic Keys for Bootstrapping a Self-Sovereign Identity", , 19 juillet 2016 (2016-07-19), XP055688469, Extrait de l'Internet: URL:https://github.com/WebOfTrustInfo/rwot 2-id2020/blob/master/draft-documents/hiera rchical-deterministic-keys-for-bootstrappi ng-a-self-sovereign-identity.md [extrait le 2020-04-22] * section 3 * ----- -/-- | 1-10 | |

DOMAINES TECHNIQUES RECHERCHES (IPC)

H04L

Le présent rapport a été établi pour toutes les revendications

| Lieu de la recherche | Date d'achèvement de la recherche | Examinateur |
|---|---|---|
| Munich | 23 octobre 2020 | Billet, Olivier |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

page 1 de 2

Europäisches
Patentamt

European
Patent Office

Office européen
des brevets

**RAPPORT DE RECHERCHE EUROPEENNE**

Numéro de la demande

EP 20 19 5146

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | Sven Bugiel ET AL: "Open access to the Proceedings of the 22nd USENIX Security Symposium is sponsored by USENIX Flexible and Fine-grained Mandatory Access Control on Android for Diverse Security and Privacy Policies Flexible and Fine-Grained Mandatory Access Control on Android for Diverse Security and Privacy Policies", Proceedings of the 22nd USENIX Security Symposium, 1 janvier 2013 (2013-01-01), XP055688671, Extrait de l'Internet: URL:https://www.usenix.org/system/files/conference/usenixsecurity13/sec13-paper_bugiel.pdf * section 4 * ----- | 5,7-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 23 octobre 2020 | Billet, Olivier |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

& : membre de la même famille, document correspondant

EPO FORM 1503 03.82 (P04C02)

page 2 de 2

## RÉFÉRENCES CITÉES DANS LA DESCRIPTION

**Littérature non-brevet citée dans la description**

- **A.M. ANTONOPOULOS ; G. WOOD.** Mastering Ethereum. O'Reilly, Décembre 2018, 79-97